Europäisches Patentamt

(19) European Patent Office

Office européen des brevets

(11) Publication number: **0 017 293**
**B1**

(12) **EUROPEAN PATENT SPECIFICATION**

(45) Date of publication of patent specification: **20.07.83**

(21) Application number: **80200284.0**

(22) Date of filing: **27.03.80**

(51) Int. Cl.³: **C 05 G 1/06** //(C05B7/00, 11/06, C05C1/00)

(54) Process for preparing complex suspension fertilizers and product obtained.

(30) Priority: **28.03.79 NL 7902405**

(43) Date of publication of application:
**15.10.80 Bulletin 80/21**

(45) Publication of the grant of the patent:
**20.07.83 Bulletin 83/29**

(84) Designated Contracting States:
**BE DE FR GB IT NL SE**

(56) References cited:
DE - A - 1 018 073
DE - B - 1 152 713
FR - A - 705 887
FR - A - 1 032 181
GB - A - 1 125 664
GB - A - 1 281 199
US - A - 2 726 949
US - A - 3 028 230

(73) Proprietor: **UNIE VAN KUNSTMESTFABRIEKEN B.V.**
**Postbus 45**
**NL-3500 AA Utrecht (NL)**

(72) Inventor: **Tanke, Marcellinus Aloysius**
**Eugeniahof 15**
**NL-6121 AJ Born (NL)**
Inventor: **Smit, Andreas Christiaan Michael**
**Willem de Zwijgerweg 121**
**NL-4191 WD Geldermalsen (NL)**

(74) Representative: **Roeffen, Wilhelmus Johannes Maria et al,**
**OCTROOIBUREAU DSM Postbus 9**
**NL-6160 MA Geleen (NL)**

Courier Press, Leamington Spa, England

Process for preparing complex suspension fertilizers and product obtained.

The invention relates to a process for preparing complex suspension fertilizers by ammoniation of a liquid obtained by digestion of phosphate rock with nitric acid and complete or substantial removal of the calcium.

Such a process is known from NL—A—6.610.521 and 6.818.164. In the process described in NL—A—6.610.521, a large part of the calcium is crystallized out from the digestion liquor as calcium nitrate tetrahydrate by cooling, upon which the crystals are separated and, with firm stirring, the remaining mother liquor is put in an already neutralized solution together with ammonia, while a pH of 6—8 is maintained at a temperature of 10—70°C. In the process described in NL—A—6.818.164, the phosphate rock is digested with nitric acid in the presence of ammonium bisulphate so that the calcium precipitates as calcium sulphate dihydrate. The mixture is filtered and the filtrate is ammoniated.

A drawback in these known processes is that in a one-step ammoniation of the digestion liquor to a product of a pH of $\geqslant 6$ it will be difficult to control the crystallization process. There will be a strong formation of coarse crystals, resulting in a product suspension which shows little homogeneity and which is therefore less stable. This phenomenon will be stronger as the ammonium nitrate content of the mixture is greater. Another drawback in the known processes is that the impurities in the digestion liquor originating from the phosphate rock may give rise to the formation of gel-like compounds, which will result in a strong increase in the viscosity of the product. Moreover, when applying some kinds of rock phosphate, a greater or smaller quantity of citrate-insoluble tricalcium phosphate and/or fluor apatite is formed in the ammoniation by the calcium still present, which means a loss of nutrient phosphate.

Finally, the known processes also have the drawback that in a one-step ammoniation to a pH $\geqslant 6$ there will be a strong temperature increase, resulting in an escape of relatively large quantities of ammonia.

Now, the invention provides a process which makes it possible for the liquid obtained in a digestion of phosphate rock with nitric acid, with all or much of the calcium removed from it, to be converted into stable, concentrated suspension fertilizers, and in which the above-mentioned drawbacks occur hardly or not at all.

This is achieved, according to the invention, by ammoniation of the digestion liquid in at least three neutralization steps, in which process the temperature in each neutralization step is lower than the temperature in the preceding step and the reaction liquid is quickly cooled between the second and the third neutralization step with the formation of suspension.

The digestion liquid to be applied in the process according to the invention may have been obtained in various ways, known as such, for instance, as described above, by substantial crystallization of the calcium as calcium nitrate tetrahydrate effected by cooling a digestion mixture of rock phosphate with nitric acid, and/or by precipitation of the calcium as calcium sulphate dihydrate, effected by addition of a sulphate-containing reagent, particularly ammonium sulphate. The liquid thus obtained mainly consists of phosphoric acid, ammonium nitrate, possibly free nitric acid, and a quantity of calcium nitrate.

According to the invention, the digestion liquid thus formed is ammoniated in at least three neutralization steps (preferably in three steps) and in such a manner that in the final step a product of a pH of between 6.5 and 7.5 is obtained. As ammonia source, gaseous ammonia can be used in the first place, but liquid ammonia can be used as well. Optionally, an aqueous ammonia solution can also be applied, which is less attractive, however, because it will cause a decrease in the nutrient content of the product.

The ammoniation in the first step is effected at a relatively high temperature, but in such a manner that the reaction liquid does not boil. To this end a temperature of between 90°C and the boiling point of the liquid is applied. Depending on the composition of the reaction liquid, this boiling point is about 100—120°C.

It is particularly advantageous to choose in the first neutralization step a reaction temperature of between 95 and 105°C, because optimum use will then be made of the heat of reaction. In this first step the ammoniation is continued until a pH of the reaction liquid of between 1.5 and 5.0, more particularly between 3.5 and 4.5 has been reached. Ammoniation to higher pH values is undesirable, because there will then be rather heavy ammonia losses.

Wherever in this application mention is made of a particular pH, it is understood to mean the measured pH of a solution obtained by diluting one part of product with four parts of water.

The residence time of the liquid in the first neutralization step is preferably more than 10 minutes, particularly about 20 minutes. Longer residence times can be applied without any objection, but do not bring any extra advantage. A residence time shorter than 10 minutes is less desirable, because the end product has been found in that case to show a rather strong increase in viscosity.

In the second neutralization step the ammoniation is effected at a temperature of between 65 and 90°C, more specifically of between 75 and 85°C. Preferably, this temperature is controlled by means of a return flow of cooled reaction mixture from the cooler- crystallizer of the subsequent cooling step. The ammoniation in this second step is continued till a pH of the reaction liquid of between 5.5 and 6.5, more specifically of between 5.5 and 6.0, has been reached. Ammoniation to a lower pH will result in an undesired formation of monoammonium phosphate. Ammoniation to a higher pH will result in the formation of diammonium phosphate, however in the form of crystals (platelets) that are too thick, causing a strong decline in the stability of the end product. The residence time in this second step is not critical but is preferably chosen between 10 and 30 minutes.

The reaction liquid from the second neutralization reactor is passed to a cooler and quickly cooled there to a temperature of below 40°C, with formation of a suspension of fine crystals comprising diammonium orthophosphate. It has appeared that in order to obtain a qualitatively good suspension rapid cooling of the liquid to a temperature of below 40°C is necessary. The cooling is effected within less than 5 seconds. Most preferably the liquid is cooled practically instantaneously to a temperature of 35°C or lower.

After the cooling the suspension is further ammoniated to a product of the required pH. This ammoniation can be effected in one or more steps. Preferably this final ammoniation is effected in one step. The temperature in this final neutralization step is kept below 40°C. The ammoniation is continued until a pH of the suspension of between 6.5 and 7.5 has been reached. The residence time of the suspension in this (these) ammoniation step(s) is not critical, but is preferably chosen between 10 and 30 minutes.

Preferably care is taken that the product from the final neutralization step contains a stabilizing agent for the suspension formed.

If phosphate rock of a high clay content is started from, the resulting suspension may contain so much clay as to make the addition of a stabilizing agent superfluous. Mostly, however, it is necessary to add to the suspension in the final neutralization step a quantity of stabilizing agent. As it has proved to be very difficult to disperse the stabilizing agent in dry form in the medium containing ammonium nitrate, the stabilizing agent is preferably added in the form of a suspension in a liquid medium, which is prepared beforehand. As stabilizing agent various stabilizing agents, known as such, can be used, for instance attapulgite or bentonite.

Preferably attapulgite clay is used. The stabilizing agent is then suspended beforehand in a liquid medium, such as water, to which a surface-active substance, for instance tetrasodium pyrophosphate, has been added if so desired. Specifically, a 20—30 weight% suspension of a clay in water is added. The quantity of stabilizing agent depends on the nature of the agent applied and on the concentration and composition of the suspension to be stabilized. When a clay is used as stabilizing agent, preference is given to the use of 0.5—3% by weight of clay, calculated as solid in relation to the quantity by weight of suspension.

In the preparation of complex suspension fertilizers it is desirable for the product to have a high nutrient content. As in applying the process according to the invention a rather large quantity of water may be brought into the system by the reaction components, for instance the nitric acid used for the digestion and the sulphate added for the precipitation of gypsum, the resulting product will sometimes be of a relatively high water content and consequently of a lower nutrient content. It may then be advantageous to incorporate between the first and the second neutralization step an evaporation step. In this evaporation step the reaction liquid is evaporated to a water content of between 20 and 30% by weight, more specifically 22—26% by weight, at a temperature of about 120°C at most. An evaporation temperature of more than about 120°C is not desirable, because it has appeared that the end product will then become very viscous. During this evaporation process foaming may occur to a greater or less degree, depending on the quantity of impurities in the reaction liquid. In order to reduce this, a quantity of anti-foaming agent may be added to the liquid in the evaporator, if desired. As such various agents, known as such, for instance alkali salts of sulphonated higher fatty acids, can be used.

The suspension formed in applying the process according to the invention can as such be used as suspension fertilizer. Depending on the composition of the digestion liquid and the degree of ammoniation and optional evaporation, products of different nutrient content can be prepared, for instance of an N-content and a $P_2O_5$-content of 22—11 and 19—16. The suspensions formed show little viscosity and are very stable and can be kept for a long time, for instance for more than 6 months, without deterioration in quality. It has appeared that, during storage, deposits of large ammonium nitrate crystals may be formed on the boundary surface between the clear liquid layer and the suspension. This phenomenon will be stronger as the ammonium nitrate content of the suspension is higher. It may then be important periodically to agitate the suspension during the storage. This may be done by regularly, for instance once to 3 times a week, homogenizing the suspension in a manner known as such, for instance by passing air through it.

It is also possible to mix the resulting suspension with other nutrient components and/or to add to the suspension one or more biocides, such as herbicides, and/or pesticides. Nutrient components which may be used are, for instance, ammonium phosphates, optionally in the form of a suspension, urea, urea-ammonium nitrate solutions, potassium salts, such as potassium chloride or potassium sulphate.

The use of urea as a nutrient component proves to have an extra advantage, because the urea dissolves in the liquid phase of the suspension, resulting in a product containing more liquid phase, which is less viscous particularly on storage at low temperature (e.g. 0°C).

Apart from the addition of nutrient components to the finished suspension, it is also possible for one or more nutrient components to be added during the preparation of the suspension, for instance to the digestion liquid or in one of the neutralization steps. If, for instance, a suspension fertilizer of a lower N : P$_2$O$_5$ ratio is desired, a quantity of phosphoric acid may be added before or during the neutralization. Also the suspensions thus obtained show excellent storage qualities.

The invention will be elucidated by means of the annexed flow sheet.

A reactor A is fed, from ammonia line 1 via line 2, with ammonia, and via line 5 with a liquid obtained in a phosphate digester (not shown). Via line 6 the reaction liquid is optionally passed to an evaporator B, to which is supplied, via line 15, an anti-foaming agent. The evaporated water is discharged via line 14. The remaining concentrated liquid formed in B is passed via line 7 to a reactor C, to which ammonia is supplied via line 3 and, optionally, cooled suspension via line 13. The reaction liquid formed is discharged from reactor C via line 8, mixed with a quantity of cooled suspension supplied via lines 11 and 12, whereafter the mixture flows to a cooler D. The suspension formed in cooler D is passed, via line 9, to reactor E, to which ammonia is supplied via line 4 and a suspension of a stabilizing agent via line 19. Via line 10 product suspension is discharged.

To the mixing vessel F a stabilizing agent is supplied via line 16, water via line 17, and a surfactant via line 18. The resulting suspension of stabilizing agent is fed, via line 19, to the reactor E.

Example 1

A rock phosphate mixture of Khouribga and Kola phosphates (weight ratio 4 :1) was treated with 57 wt.% nitric acid in a slight excess in relation to the quantity required stoichiometrically for the digestion to phosphoric acid and calcium nitrate. The resulting liquid reaction mixture was cooled to about 5°C, in which process a large part of the calcium crystallized as calcium nitrate tetrahydrate. After removal of these crystals by centrifugation, a mother liquor of a CaO : P$_2$O$_5$ molar ratio of about 0.5 and a water content of about 25% by weight resulted.

This mother liquor was passed continuously into a stainless steel reactor of a capacity of 1 litre provided with a stirrer, at a delivery rate of about 3.5 kg per hour. Hence, the residence time of the mother liquor in the reactor was about 20 minutes. The reactor was also continuously fed with gaseous ammonia, in such a quantity that the pH of the reaction mixture in the reactor was about 4.5. Owing to the released heat of reaction the temperature in the reactor was about 100°C.

The liquid reaction mixture formed in this first reactor was passed continuously to a second similar reactor, which was also continuously fed with gaseous ammonia in such a quantity that the pH of the reaction mixture rose to about 6.0. The temperature in this second reactor was kept at about 80°C by means of a continuous recycle of cooled product obtained in the cooler of the subsequent cooling step.

The liquid reaction mixture formed in the second reactor was fed to the said cooler and virtually instantaneously cooled there to about 30—35°C by mixing with a very large quantity of already cooled liquid. In this process a suspension was formed of very fine crystals mainly consisting of diammonium phosphate and ammonium nitrate. As already indicated above, a part of this cooled suspension was recirculated to the second reactor.

The rest of the suspension was passed to a third stainless steel reactor, which was continuously fed with gaseous ammonia in such a quantity that the pH of the resulting suspension was 6.9—7.0. The temperature in this third reactor was kept at 30—35°C. To this third reactor attapulgite clay was also supplied, in a quantity of 1.5% by weight, calculated as clay in relation to the quantity by weight of suspension, and in the form of a 25 wt.% suspension in water, to which has been added, as a surface-active substance, 2% by weight of tetrasodium pyrophosphate, calculated in relation to the quantity by weight of clay.

From this third reactor a suspension of a nutrient content of about 19—16—0, expressed as N, P$_2$O$_5$ and K$_2$O, respectively, and a water content of about 23% by weight was continuously discharged as product.

The finished suspension was passed into a receiving tank and periodically (once to 3 times a week) homogenized herein by passing air through it. After storage for more than 6 months the suspension still showed no settling of crystals and could, without further treatment, still be used immediately as fertilizer suspension.

Example 2

a) A part of the 19—16—0 suspension obtained in example 1 was mixed with prill-shaped urea in a weight ratio of 83 :17. A suspension of a composition of 24—12—0 was obtained, which, on storage for 6 months, again proved to be very stable.

b) In the same way 75 parts by weight of the 19—16—0 suspension were mixed with 20 parts by weight of finely divided potassium chloride (K$_2$O content 62%) and 5 parts by weight of water. A stable suspension of a composition of 14—12—12 was obtained.

c) In the same way 61 parts by weight of the 19—16—0 suspension were mixed with 33 parts by weight of finely divided potassium sulphate ($K_2O$ content 54%) and 6 parts by weight of water. A stable suspension of a composition of 11—9—17 was obtained.

### Example 3

A rock phosphate mixture of Khouribga and Kola phosphates (weight ratio 4:1) was treated with the quantity of 57 wt.% nitric acid stoichiometrically required for the digestion to phosphoric acid and calcium nitrate. To the resulting liquid mixture a solution containing ammonium sulphate and ammonium nitrate was added, in which process a precipitate of calcium sulphate dihydrate was formed. This precipitate was filtered off, resulting in a filtrate of a $CaO:P_2O_5$ molar ratio of 0.5 and a water content of about 50% by weight.

This filtrate was ammoniated in a first reactor with gaseous ammonia at a temperature of 95°C until a pH of 4.0 was reached. The liquid reaction mixture formed was passed to an evaporator, where the mixture was heated for about 30 minutes at a temperature of 118—120°C. In this process about 25% by weight of the liquid fed in was evaporated as water. During the evaporation a very small quantity of anti-foaming agent (sodium oleyl sulphonate) was added to the liquid.

The liquid mixture formed was subsequently treated in a second reactor with gaseous ammonia to a pH of 5.7. The temperature in this second reactor was kept at about 85°C by means of a flow of cooled product from the cooler. The reaction mixture was passed to the cooler and virtually instantaneously cooled to about 35°C, in which process a suspension of very fine crystals was formed. A part of this suspension was recirculated as cooling stream to the second reactor. The rest of the suspension was passed to a third reactor, treated there at 25°C with gaseous ammonia to a pH of 6.8, while feeding in a suspension of 25% (wt) attapulgite in water, in a quantity of 1.5% by weight of attapulgite with respect to the quantity by weight of suspension.

The product discharged from this third reactor was an N—P suspension of a nutrient content of 22—11—0 and a water content of 24% by weight. The suspension was stored in the same way as in example 1 and contained no settled crystals after more than 6 months.

### Example 4

a) Of the suspension obtained in example 3, 67 parts by weight were mixed with 33 parts by weight of a urea-ammonium nitrate solution (nitrogen content 32%). A stable suspension of a composition of 25—7—0 was obtained.

b) In the same way 50 parts by weight of the suspension obtained in example 3 were mixed with 50 parts by weight of an ammonium phosphate suspension of a composition of 13—38—0. A stable suspension of a composition of 17—24—0 was obtained.

c) In the same way 82 parts by weight of the suspension obtained in example 3 were mixed with 15 parts by weight of finely divided potassium chloride ($K_2O$ content 62%) and 3 parts by weight of water. A stable suspension of a composition of 18—9—9 was obtained.

d) In the same way 40 parts by weight of the suspension obtained in example 3 were mixed with 40 parts by weight of an ammonium phosphate suspension (13—38—0) and 20 parts by weight of a urea-ammonium nitrate solution (32—0—0). A stable suspension of a composition of 20—20—0 was obtained.

e) In the same way 67 parts by weight of the suspension obtained in example 3 are mixed with 14 parts by weight of finely divided potassium sulphate ($K_2O$ content 54%) and 19 parts by weight of water. A stable suspension of a composition of 15—7.5—7.5 was obtained.

### Example 5

To the filtrate obtained in example 3 after filtering off calcium sulphate dihydrate, phosphoric acid of a $P_2O_5$ content of 28% by weight was added in a weight ratio of about 10:7.

The resulting liquid mixture was ammoniated in the same way as in example 3 in a first reactor at 100°C to a pH of 4.5, subsequently evaporated at 115°C, ammoniated in a second reactor at 80°C to a pH of 6.0, cooled to 35°C and, with addition of an attapulgite suspension, ammoniated in a third reactor at 38—39°C to a pH of 7.0.

The product obtained was a stable suspension of a nutrient content of 17—24—0 and a water content of 23% by weight.

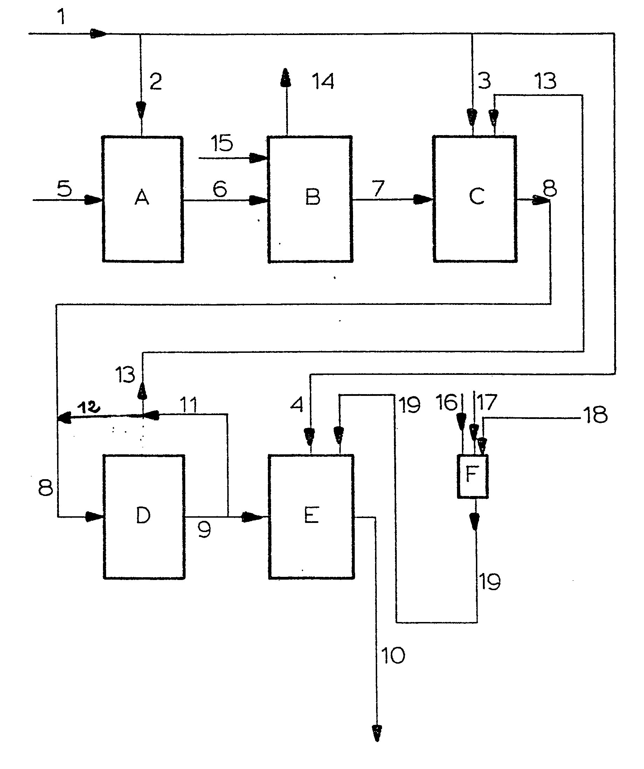

## Claims

1. Process for preparing complex suspension fertilizers starting from a liquid obtained by digestion of phosphate rock with nitric acid and complete or substantial removal of the calcium by ammoniating this liquid in a plurality of steps, characterized in that

a. In a first step ammoniation is effected at a temperature of between 90°C and the boiling point of the liquid and continued until a pH of the reaction liquid (as hereinafter defined) of between 1.5 and 5.0 has been reached;

b. In a second step ammoniation is effected at a temperature of between 65 and 90°C and continued until a pH of the reaction liquid (as hereinafter defined) of between 5.5 and 6.5 has been reached;

c. The reaction liquid obtained in that second step is cooled within less than 5 seconds to a temperature of below 40°C, with formation of a suspension of fine crystals comprising diammonium orthophosphate;

d. The suspension formed is further ammoniated in one or more steps at a temperature of below 40°C until a pH of the reaction liquid (as hereinafter defined) in the final step of between 6.5 and 7.5 has been reached, in which process the pH should be understood to be the measured pH of a solution formed by diluting one part of the reaction liquid with four parts of water.

2. Process according to claim 1, characterized in that in the first step ammoniation is effected at a temperature of between 95 and 105°C and continued until a Ph of the reaction liquid (as hereinbefore defined) of between 3.5 and 4.5 has been reached.

3. Process according to claim 1 or 2, characterized in that in the second step ammoniation is effected at a temperature of between 75 and 85°C and continued until a pH of the reaction liquid (as hereinbefore defined) of between 5.5 and 6.0 has been reached.

4. Process according to any one of claims 1—3, characterized in that between the first and the second ammoniation step the liquid is evaporated to a water content of between 20 and 30% by weight by heating to a temperature of 120°C at most.

5. Suspension fertilizers obtained by the process according to any one of the claims 1—4.

**Revendications**

1. Procédé pour préparer des engrais complexes en suspension à partir d'un liquide obtenu par digestion d'un mineral de phosphate avec l'acide nitrique et élimination complète ou pratiquement complète de calcium par traitement de ce liquide par l'ammoniac en plusieurs stades opératoires, caractérisé en ce que

a) dans un premier stade le traitement par l'ammoniac est réalisé à une température comprise entre 90°C et le point d'ébullition du liquide et poursuivie jusqu'à ce que le pH du liquide de réaction (tel que défini ci-après) atteigne une valeur de 1,5 à 5,0;

b) dans un second stade, le traitement à l'ammoniac est réalisé à une température de 65 à 90°C et poursuivi jusqu'à ce que le pH du liquide de réaction (tel que défini ci-après) atteigne une valeur de 5,5 à 6,5;

c) le liquide de réaction obtenu dans ce deuxième stade est refroidi en moins de 5 secondes à une température inférieure à 40°C, avec formation d'une suspension de cristaux fins comprenant de l'orthophosphate diammonique;

d) la suspension formée est à nouveau soumise à traitement par l'ammoniac en un ou plusieurs stades à une température inférieure à 40°C jusqu'à ce que le pH du liquide de réaction (tel que défini ci-après) atteigne au stade final une valeur de 6,5 à 7,5, le pH dont il est question dans tout ce qui précède étant le pH mesuré sur une solution formée en diluant 1 partie du liquide de réaction par 4 parties d'eau.

2. Procédé selon la revendication 1, caractérisé en ce que, au premier stade, le traitement à l'ammoniac est réalisé à température de 95 à 105°C et poursuivi jusqu'à ce que le pH du liquide de réaction (tel que défini ci-dessus) atteigne une valeur de 3,5 à 4,5.

3. Procédé selon la revendication 1 ou 2, caractérisé en ce que, au deuxième stade, le traitement à l'ammoniac est réalisé à une température de 75 à 85°C et poursuivi jusqu'à ce que le liquide de réaction atteigne un pH (tel que défini ci-dessus) de 5,5 à 6,0.

4. Procédé selon l'une quelconque des revendications 1 à 3, caractérisé en ce que, entre le premier et le deuxième stade de traitement à l'ammoniac, le liquide est évaporé jusqu'à une teneur en humidité d'environ 20 à 30% en poids par chauffage à une température de 120°C AU maximum.

5. Engrais en suspension obtenus par le procédé selon l'une quelconque des revendications 1 à 4.

**Patentansprüche**

1. Verfahren zur Herstellung komplexer Suspensionsdüngemittel, auf der Basis einer Flüssigkeit, erhalten durch Aufschluss von Phosphatgestein mit Salpetersäure und vollständiger oder wesentlicher Entfernung des Calciums, durch Ammonisierung dieser Flüssigkeit in mehreren Stufen, dadurch gekennzeichnet, dass:

a. In einer ersten Stufe die Ammonisierung bei einer Temperatur zwischen 90°C und dem Siedepunkt der Flüssigkeit erfolgt und bis zur Erreichung eines pH-Wertes der Reaktionsflüssigkeit (wie im folgenden definiert) zwischen 1,5 und 5,0 fortgesetzt wird;

b. In einer zweiten Stufe die Ammonisierung bei einer Temperatur zwischen 65 und 90°C erfolgt und bis zur Erreichung eines pH-Wertes der Reaktionsflüssigkeit (wie im folgenden definiert) zwischen 5,5 und 6,5 fortgesetzt wird;

c. Die in dieser zweiten Stufe erhaltene Reaktionsflüssigkeit in weniger als 5 Sekunden auf eine Temperatur unter 40°C abgekühlt wird, unter Bildung einer Suspension feiner, Diammonium-Orthophosphat enthaltender Kristalle;

d. Die gebildete Suspension weiter ammonisiert wird, und zwar in einer oder mehreren Stufen bei einer Temperatur unter 40°C, bis ein pH-Wert der Reaktionsflüssigkeit (wie im folgenden definiert) in der letzten Stufe zwischen 6,5 und 7,5 erreicht worden ist, in welchem Verfahren der pH-Wert zu verstehen ist also der gemessene pH-Wert einer Lösung, erhalten durch Verdünnung eines Teiles der Reaktionsflüssigkeit mit vier Teilen Wasser.

2. Verfahren nach Anspruch 1, dadurch gekennzeichnet, dass in der ersten Stufe die Ammonisierung bei einer Temperatur zwischen 95 und 105°C erfolgt und fortgesetzt wird, bis ein pH-Wert der Reaktionsflüssigkeit (wie im vorigen definiert) zwischen 3,5 und 4,5 erreicht ist.

3. Verfahren nach Anspruch 1 oder 2, dadurch gekennzeichnet, dass in der zweiten Stufe die Ammonisierung bei einer Temperatur zwischen 75 und 85°C erfolgt und fortgesetzt wird, bis ein pH-Wert der Reaktionsflüssigkeit (wie im vorigen definiert) zwischen 5,5 und 6,0 erreicht ist.

4. Verfahren nach einem der Ansprüche 1—3, dadurch gekennzeichnet, dass die Flüssigkeit zwischen der ersten und der zweiten Ammonisierungsstufe durch Erhitzen auf eine Temperatur von maximal 120°C bis auf einen Wassergehalt zwischen 20 und 30% eingedämpft wird.

5. Suspensionsdüngemittel, erhalten mit Hilfe des Verfahrens gemäss einem der Ansprüche 1—4.